Europäisches Patentamt

European Patent Office

Office européen des brevets

(19)

(11)  EP 1 348 521 A1

(12)  # EUROPEAN PATENT APPLICATION
published in accordance with Art. 158(3) EPC

(43) Date of publication:
  **01.10.2003  Bulletin 2003/40**

(21) Application number: **01917716.1**

(22) Date of filing: **30.03.2001**

(51) Int Cl.7: **B25J 5/00**

(86) International application number:
  **PCT/JP01/02775**

(87) International publication number:
  **WO 02/022319 (21.03.2002 Gazette 2002/12)**

(84) Designated Contracting States:
  **AT BE CH CY DE DK ES FI FR GB GR IE IT LI LU MC NL PT SE TR**

(30) Priority: **11.09.2000  JP 2000275690**

(71) Applicant: **Japan as Repre. by Dir.-General of Nat. Institute of Advanced Indust. Science & Technology, Min. of Economy, Trade & Industry Tokyo 100-8921 (JP)**

(72) Inventor: **TAKEUCHI, Hiroki**
  **Mechanical Engineering Laboratory &Technology, Ministry of Economy Ibaraki (JP)**

(74) Representative: **Panten, Kirsten**
  **Reichel & Reichel,**
  **Patentanwälte,**
  **Parkstrasse 13**
  **60322 Frankfurt am Main (DE)**

(54)  **REAL-TIME OPTIMAL CONTROL METHOD FOR WALKING ROBOT**

(57)     ABSTRACT OF THE DISCLOSURE

It is an object of the present invention to provide the ZMP control of a leg-type robot by utilizing RHC capable of real time optimum calculation.

A feature of the invention is to control a robot by utilizing both trajectory control using zero moment point automatically generated in real time and nonlinear control.

In order to solve the above problem, the invention provides a real time optimum control method for a leg-type robot wherein optimum target ZMP trajectories are obtained in real time by solving an optimum solution of an equation:

$$u_{zmp}(u_z - g) = x(u_z - g)zu_x \qquad (16)$$

by using $x_{zmp}$ as a new input $u_{zmp}$ where ZMP of the leg-type robot satisfies an equation constraint condition . of an equation:

$$x_{zmp}(u_z - g) = x(u_z - g) - zu_x \qquad (15)$$

F i g .  3

**Description**

TECHNICAL FIELD

The present invention relates to control of a zero moment point (in this specification, called "ZMP") of a leg-type robot utilizing receding horizon control (hereinafter called "RHC") capable of real time optimum calculation.

BACKGROUND ART

As shown in Fig, 1, in order for a leg-type robot standing on one leg to walk in a statically stable state, the center of gravity of the robot is required to be inside of the sole area. If a leg-type robot stands on two legs, the center of gravity of the robot is required to be on a straight line interconnecting both the sole areas. If a leg-type robot stands on four legs, the center of gravity of the robot is required to be inside of a polygon constituted of the four sole areas. In order for a leg-type robot to walk in a dynamically stable state, a similar concept to the center of gravity point is needed. This concept is generally called ZMP.

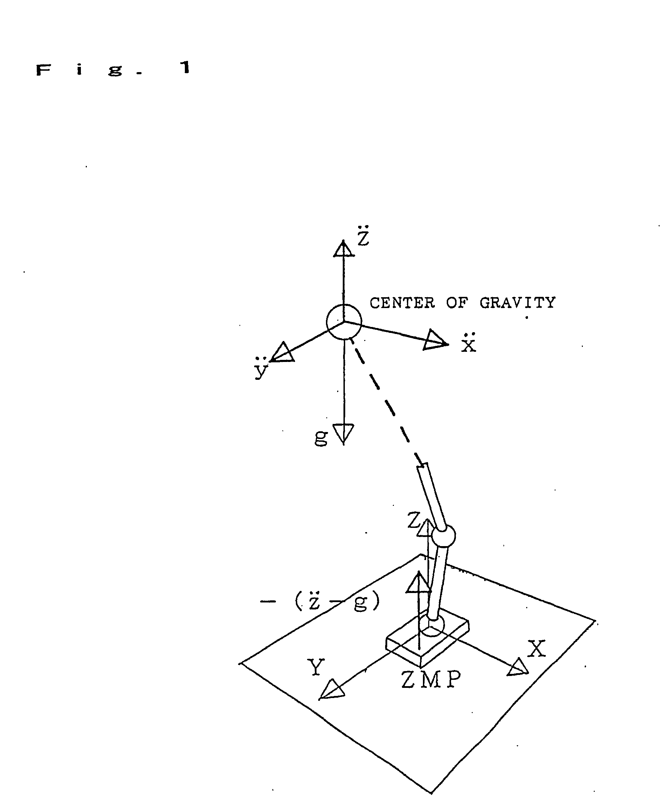

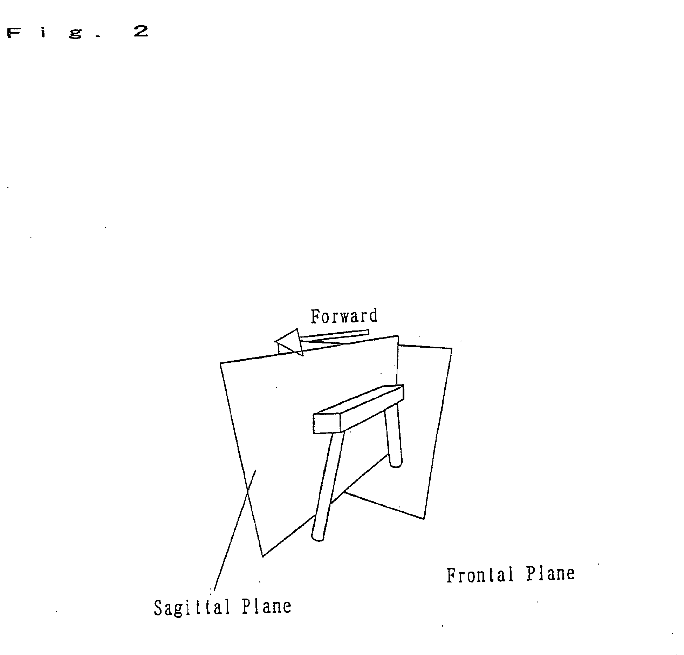

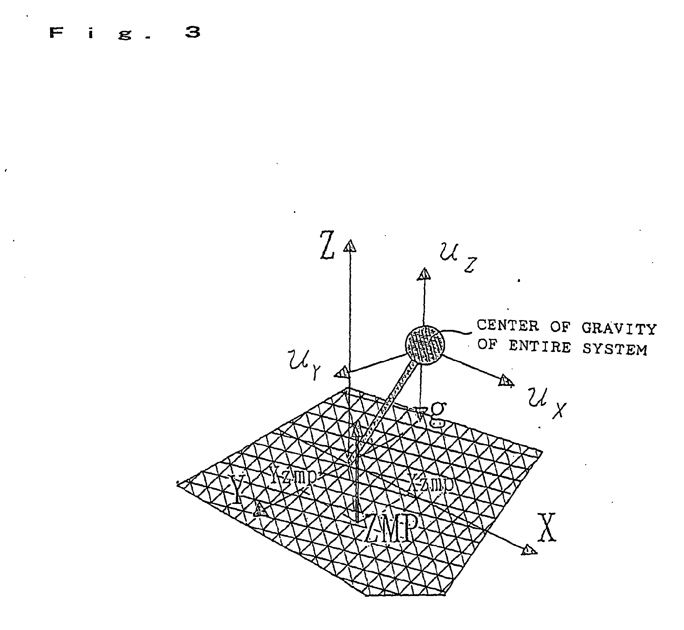

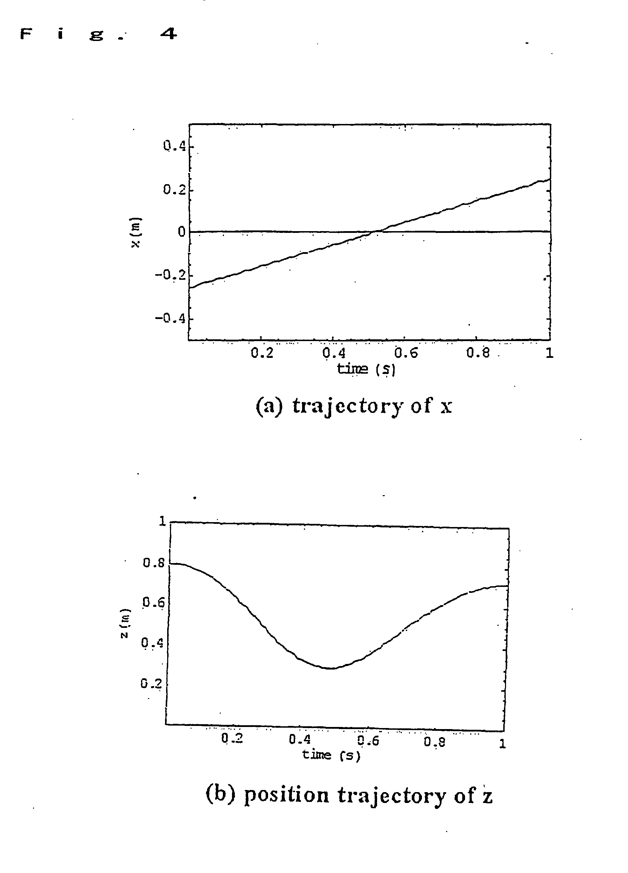

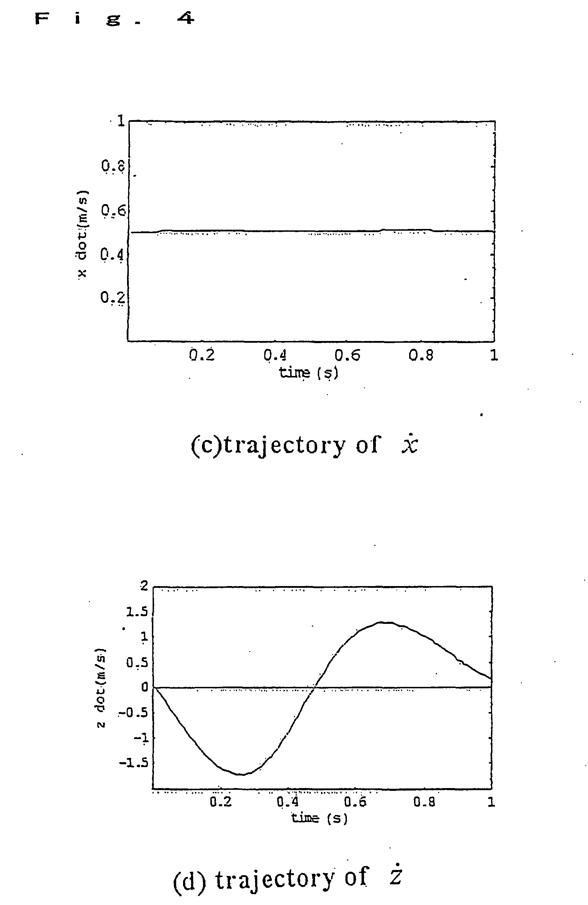

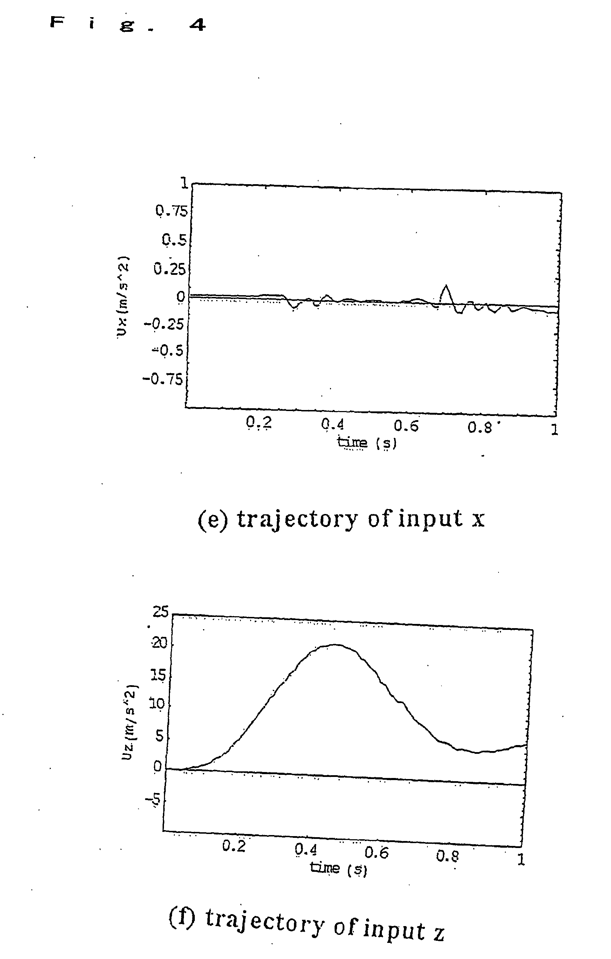

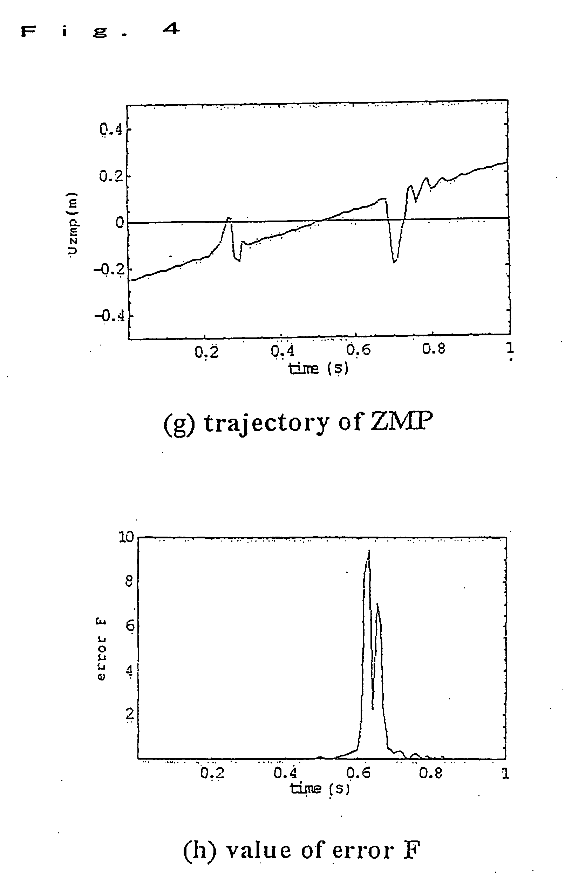

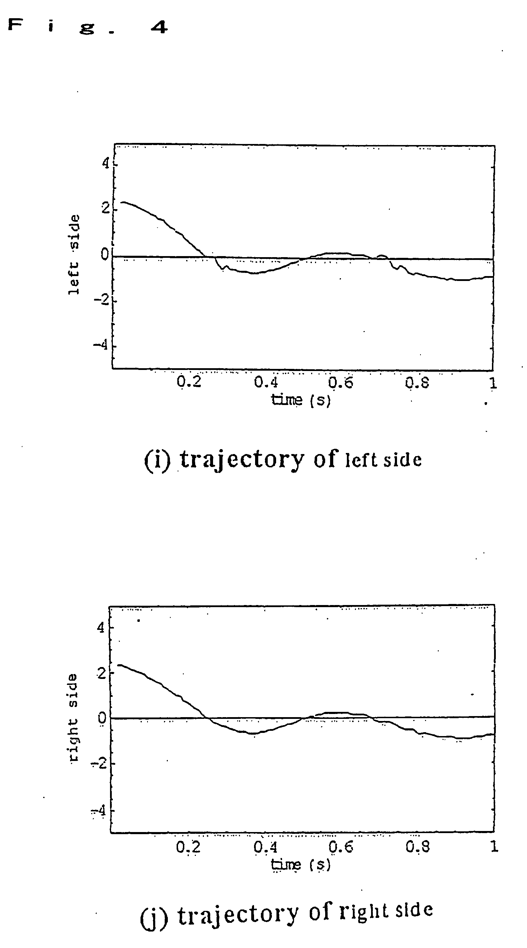

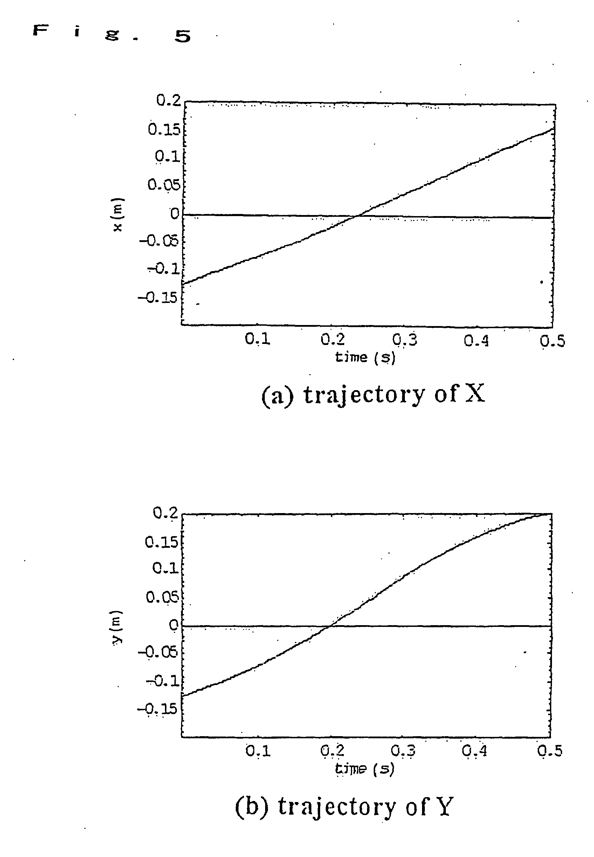

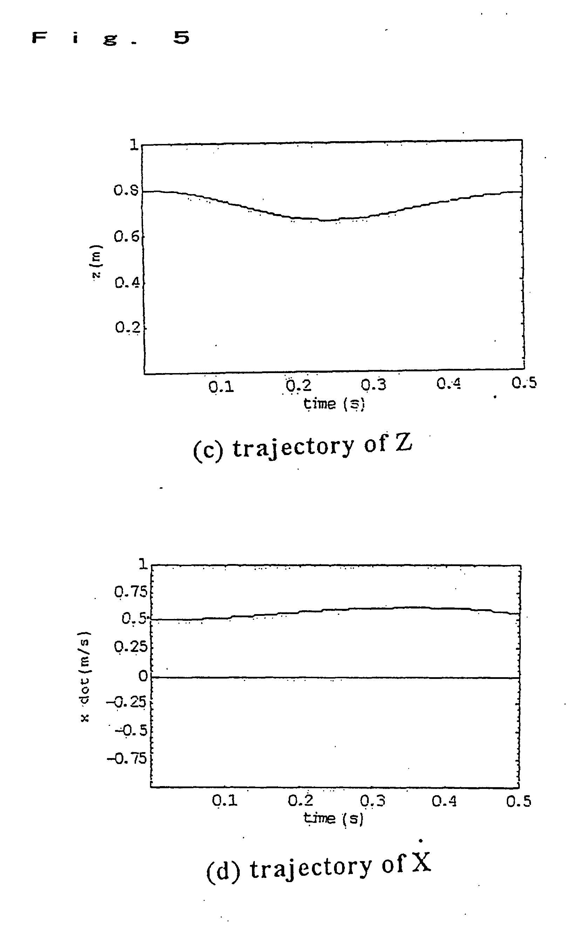

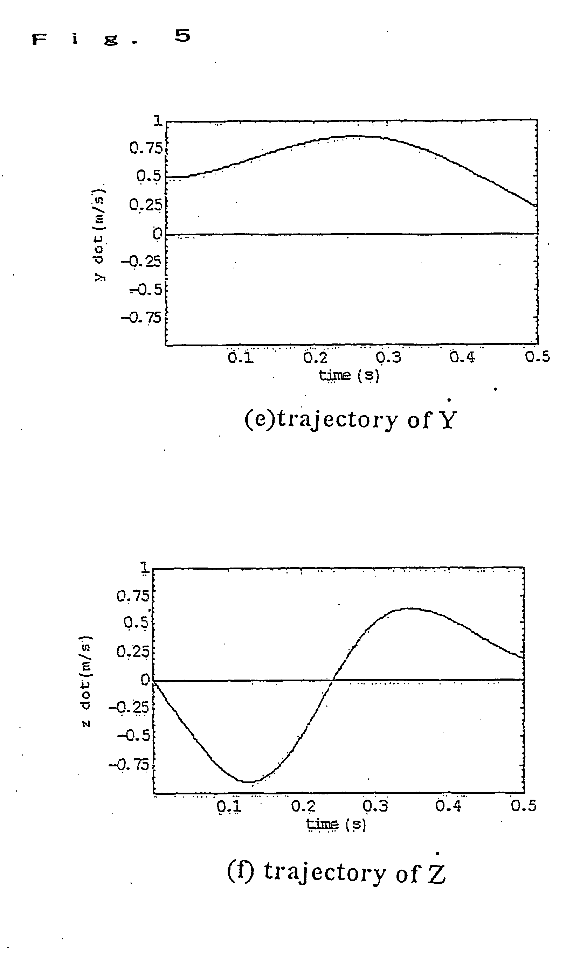

Referring to Fig. 2, ZMP of a link from the 0-th to n-th articulations in the sagittal plane can be expressed by the following equation (1):

$$x_{zmp} = \frac{\sum_{i=0}^{n} m_i(-g+\ddot{z}_i)x - \sum_{i=0}^{n} m_i\ddot{x}_i z_i}{\sum_{i=0}^{n} m_i(-g+\ddot{z}_i)x} \qquad (1)$$

If the center of gravity position of the entire robot is used as a representative one, the equation (1) can be simply expressed as:

$$x_{zmp} = \frac{(-g+\ddot{z})x - z\ddot{x}}{-g+\ddot{z}} \qquad (2)$$

Namely, ZMP is a point where a total moment about the origin of the robot balances a moment obtained from ZMP and the floor reactive force. If ZMP is in the polygon constituted of sole areas similar to the center of gravity, the robot can walk in a dynamically stable state, whereas if ZMP is outside of the polygon, the robot falls and walking cannot be continued.

A problem associated with a conventional leg-type robot resides in that it is not possible to uniquely decide the solution of ZMP of the equation (2) because there are two variables x and z. In order to avoid this, it has conventionally been inevitable to adopt a method of calculating a pseudo ZMP, for example, by assuming that the center of gravity position is kept at a constant height $h_{ref}$, i.e., $\ddot{z}$ =0 and hence:

$$x_{zmp} = \frac{gx - h_{ref}\ddot{x}}{g} \qquad (3)$$

However, although the pseudo ZMP can be obtained as the solution, a true ZMP cannot be obtained. If the center of gravity acceleration can be input, for example, as the following equation (4):

$$\ddot{x}=\frac{1}{href}\left(gx-K \text{ (target ZMP} - \text{center of all reactive force)}\right) \quad (4)$$

then a restoration torque., by which all real floor reactive force is converged to a target ZMP, can be obtained.

Designer's intention that the center. of gravity height is kept constant is incorporated because ZMP can be obtained uniquely by introducing the equation (4). If a true ZMP is to be calculated by a conventional method, it is necessary to formulate ZMP beforehand as an optimization problem and calculate it through a gradient method, or the like. In the case of optimization by the gradient method, it is necessary to perform iteration calculation so that the optimization calculation usually becomes off-line calculation. Such off-line optimization calculation is associated with a problem that it is not possible to deal with an obstacle not anticipated, as opposed to real time calculation for robot control.

It is an object of the present invention to provide the ZMP control of a leg-type robot by utilizing RHC capable of real time optimum calculation. A feature of the invention is to control a robot by utilizing both target ZMP trajectories automatically generated in real time and nonlinear control.

## DISCLOSURE OF THE INVENTION

The invention aims to solve the above-described problems and provide a real time optimum control method (hereinafter simply called a "first invention") for a leg-type robot wherein optimum target ZMP trajectories are obtained in real time by solving an optimum solution of an equation (16) by using $x_{zmp}$ as a new input $u_{zmp}$ where ZMP of the leg-type robot satisfies an equation constraint condition of an equation. (15).

$$x_{zmp}(u_z-g)=x(u_z-g)-zu_x \quad (15)$$

$$u_{zmp}(u_z-g)=x(u_z-g)-zu_x \quad (16)$$

This invention is characterized in the method of real-time optimum control of the leg-type robot wherein a target trajectory of the center of gravity of the entire robot and optimum target trajectories according to the first invention are generated and each articulation of the robot is controlled through nonlinear control. That is, according to the invention, all target trajectories necessary for real time control of the robot are generated in real time, and the robot is practically controlled by usual nonlinear control. Moreover, if RHC is formulated taking nonlinearity of the robot into consideration, all real time controls of the robot can be realized only by RHC.

In this invention, calculation results obtained by changing each parameter in accordance with the first invention are collected in advance, so that the motion range in the sole area of each target ZMP trajectory can be grasped for a preset robot motion. It is therefore possible to provide a real time optimum control of a foot-type robot capable of properly setting the sole area of a robot.

## BEST MODE FOR PRACTICING THE INVENTION

RHC which contains the equation constrain will be described. Conventional formulation of RHC does not include the equation constraint condition. The state equation of a system whose RHC is controlled in real time is assumed to be given by:

$$\dot{x}=f(t,x(t),u(t)) \quad (5)$$

wherein x represents a state variable, u represents a control input, t represent a time, and f represents a function having necessary differentiation capability. The equation constraint condition is assumed to be given by:

$$C(x(t),u(t),t)= 0 \quad (6)$$

In this case, Hamiltonian H is:

$$H = L + \lambda^T f + \rho^T C \tag{7}$$

where L is a Lagrangian, $\lambda$ and $\rho$ are undetermined multipliers.

An Euler-Lagrange equation is formulated as:

$$\dot{\lambda} = -H_x^T$$

$$H_u = 0$$

$$\dot{x} = f \tag{8}$$

$$C = 0$$

$$\chi[x(t),0] = 0$$

$$\psi[x(t),T] = 0$$

A minute change from an optimum trajectory can be considered as:

$$\dot{\delta x} = f_x \delta x + f_u \delta u + f_\rho \delta \rho$$

$$\dot{\delta \lambda} = -H_{xx} \delta x - f_x^T \delta \lambda - H_{xu} \delta u - H_{x\rho} \delta \rho \tag{9}$$

$$H_{ux} \delta x + f_u^T \delta \lambda + H_{uu} \delta u + H_{u\rho} \delta \rho = 0$$

$$C_u \delta_u + C_x \delta x = 0$$

By solving the two equations indicating fine changes of $H_u = 0$ and $H_\eta$ (i.e., C = 0) as simultaneous equations, $\delta u$ and $\delta \rho$ can be deleted.

By substituting the calculation results into the latter two equations, the following equation can be obtained:

$$\frac{d}{dt}\begin{bmatrix} \delta x \\ \delta \lambda \end{bmatrix} = \begin{bmatrix} A & -B \\ -C & -A^T \end{bmatrix}\begin{bmatrix} \delta x \\ \delta \lambda \end{bmatrix} \qquad (10)$$

where:

$$A = f_x - f_u H_{uu}^{-1} H_{ux}$$

$$B = f_u H_{uu}^{-1} f_u^T \qquad (11)$$

$$C = H_{xx} - H_{xu} H_{uu}^{-1} H_{ux}$$

A time-varying linear equation including the equation constraint condition can therefore be obtained. Thereafter, real time optimum solutions can be obtained according to a continuous method. For example, refer to "Real Time Optimization Approach to Nonlinear Optimum Feedback Control" written by Toshiyuki Ohtsuka, Measurement and Control, vol. 36, no. 11, pp. 776-783, 1997.

A most basic example of modeling a two- or four-foot-type robot is to treat an entire robot as one representative mass point. This approach of treating an entire robot as a headstand pendulum of one mass point has been conventionally used in general. Such modeling by a representative mass point can be easily applied to a two-, four-foot-type robot, or a multi-foot-type robot, as will be later described.

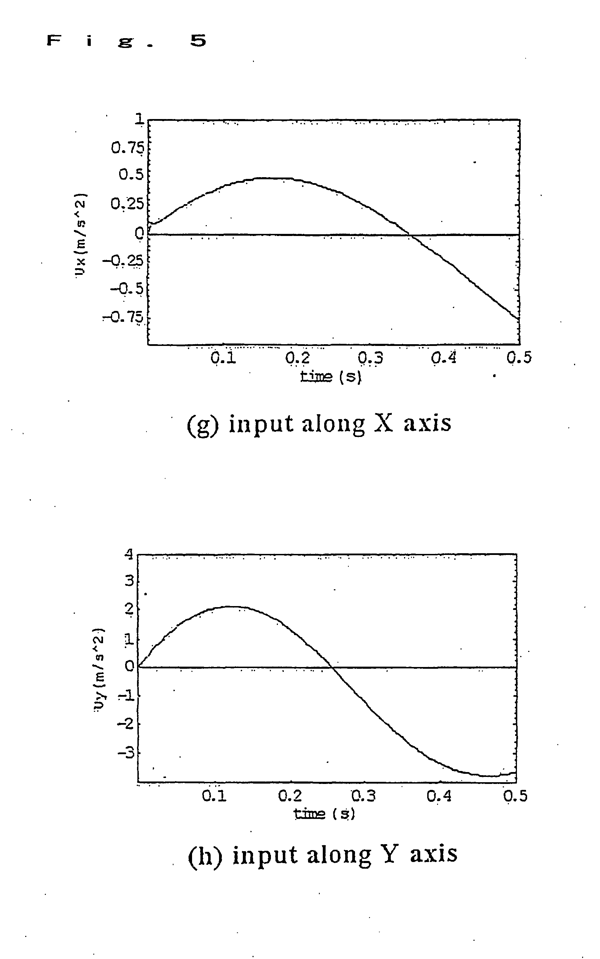

Accelerations in X and Y directions are set as inputs to the system, which are given as shown in. Fig. 3 by:

$$u_x = \ddot{x}, u_z = \ddot{z} \qquad (12)$$

Gravity is applied downward in the vertical direction. A state equation is therefore given by:

$$\frac{d}{dt}\begin{bmatrix} x \\ z \\ \dot{x} \\ \dot{z} \end{bmatrix} = \begin{bmatrix} \dot{x} \\ \dot{z} \\ u_x \\ u_z - g \end{bmatrix} \qquad (13)$$

This equation is for the sagittal plane. The state equation for the frontal plane is given by:

$$\frac{d}{dt}\begin{bmatrix} y \\ z \\ \dot{y} \\ \dot{z} \end{bmatrix} = \begin{bmatrix} \dot{y} \\ \dot{z} \\ u_y \\ u_z - g \end{bmatrix} \tag{14}$$

Next, consider the equation constraint condition of a foot-type robot. ZMP of the foot-type robot is required to satisfy the following equation constraint condition at each and every time. ZMP is a point that a total moment becomes 0. If ZMP is inside of the polygon defined by soles or legs on the ground, then it is possible to support a floor reactive force without generating any moment.

$$x_{zmp}(u_z\text{-}g)=x(u_z\text{-}g)\text{-}zu_x \tag{15}$$

where g is an acceleration of gravity.

As shown in Fig. 3, the equation (15) indicates that a total moment generated by accelerations applied to the mass point and by gravity is balanced. If ZMP is inside of the polygon defined by a sole or a leg portions on the ground, then it is possible to support a floor reactive force without generating any moment.

However, for formulation of ZMP as the optimization control problem; if ZMP is used as one state variable of the state equation, it becomes necessary to differentiate ZMP. Some device is therefore required in this point.

If $x_{zmp}$ in the equation (15) is used as a new input $u_{zmp}$, the formulation can be realized and the equation (15) becomes:

$$u_{zmp}(u_z\text{-}g)=x(u_z\text{-}g)\text{-}zu_x \tag{16}$$

If ZMP is treated as one of inputs, an optimum ZMP input can be obtained at the same time when the optimum solution is calculated. In this context, the equation constrain condition pays an important roll.

An evaluation function uses the norm of inputs. A feature of the evaluation function is an inclusion of $u_{zmp}$. By setting in this manner, it is possible to calculate a solution which suppresses the norm between each axis acceleration and ZMP to the minimum. Setting ZMP so as to move ZMP in the sole area as less as possible results in allowing the sole area of a robot to be designed as small as possible.

$$J = XS_f X^T + \int_t^{t+T}\left[u_x(t,\tau) \quad u_z(t,\tau) \quad u_{zmp}(t,\tau)\right]R\begin{bmatrix} u_x(t,\tau) \\ u_z(t,\tau) \\ u_{zmp}(t,\tau) \end{bmatrix}d\tau \tag{17}$$

$$X = \left[x_f - x(t_f) \quad y_f - y(t_f) \quad \dot{x}_f - \dot{x}(t_f) \quad \dot{y}_f - \dot{y}(t_f)\right]$$

Other evaluation functions having different terms may be used if they have the ZMP input $u_{zmp}$ term. More specifically, the scope of the invention is intended to include all evaluation functions if they have the $u_{zmp}$ term. For example, the invention claims all evaluation functions J if they include $u^2_{zmp}$ in an "L" portion of the equation J.

The evaluation function for RHC is calculated in each section in the range from time t to time t + T.

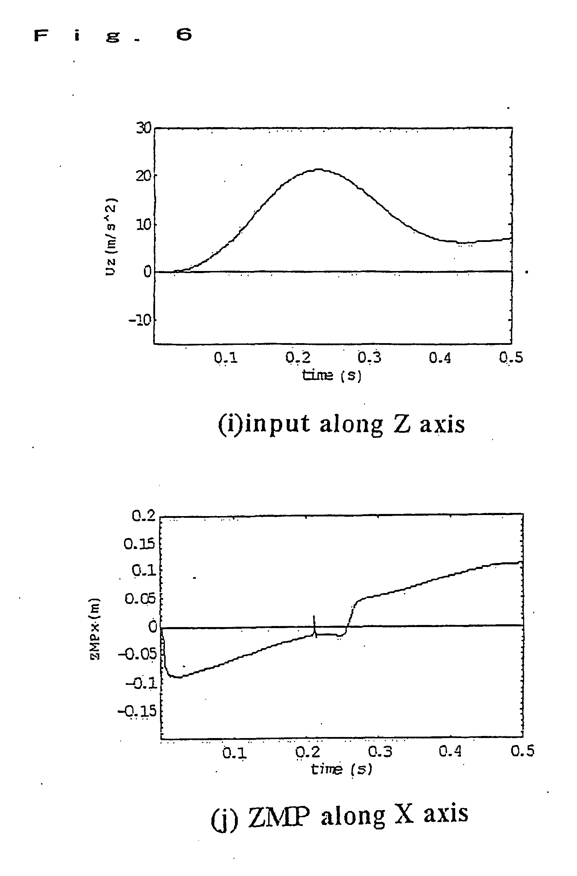

Figure 4 illustrates examples of numerical calculations. The parameters used were a mass m = 1.0 kg, a horizontal speed 0.5 m/sec and a vertical speed 1.0 m/sec at initial and final state points. The initial values were (x, z) = (-0.25, 0.8, 0.5, 0.0) and the target values were (x, z) = (0.25, 0.8, 0.5, 0.0). R and Sf were set as R = (1.0, 1.0, 1.0) and Sf = (1.0, 4400.0, 1.0, 0.0). It can be confirmed that as the system moves toward the target value shown in Fig. 4 (a), ZMP also moves as shown in Fig. 4(g). In order to make it easy to check the motion of the system, the horizontal position is advanced by 0.5 m per 1.0 sec relative to a height 0.8 m. The motion is relatively large as a foot-type robot. In the embodiment of this invention, ZMP can be generated even for such a large motion.

Figs. 4(i) and 4(j) show the time sequential calculation results of the left and right sides of the constraint condition equation:

$$u_{zmp}(u_z\text{-}g)=x(u_z\text{-}g)\text{-}zu_x \tag{16}$$

in order to confirm whether the generated ZMP values are appropriate or not. It can be seen from Figs. 4(i) and 4(j) that the left and right sides are approximately balanced and the ZMP values sequentially generated are appropriate.

A CPU time.taken for the above calculations was 0.09 sec which was sufficiently shorter than the simulation time of 1.5 sec. It can therefore be understood that real time control is possible.

According to the embodiment method described above, ZMP inputs can be generated in real time, which is very convenient as compared to a conventional method by which ZMP trajectories are calculated off-line beforehand.

Fig. 4(h) shows a change in an error F generated while RHC is performed. This simulation shows that the error F can be suppressed to a sufficiently low value as a whole, although the error F becomes temporarily large.

In order to make it easy to understand the description, the two-dimensional plane has been used. Formulation in the three-dimensional space is also possible as one application of the invention. A state equation for a three-dimensional mass point is given by:

$$\frac{d}{dt}\begin{bmatrix} x \\ y \\ z \\ \dot{x} \\ \dot{y} \\ \dot{z} \end{bmatrix} = \begin{bmatrix} \dot{x} \\ \dot{y} \\ \dot{z} \\ u_x \\ u_y \\ u_z - g \end{bmatrix} \tag{18}$$

For the constraint condition, it is necessary to take into consideration the balance between x- and y-axis. directions

$$x_{zmp}(u_z - g) = -u_x z + (u_z - g)x$$

$$y_{zmp}(u_z - g) = -u_y z + (u_z - g)y \tag{19}$$

In order to reduce the number of restraint conditions, the above two equations may be changed to one equation:

$$u_x z(y_{zmp}\text{-}y)=u_y z(x_{zmp}\text{-}x) \tag{20}$$

An evaluation function uses a minimum norm between each axis acceleration and a ZMP input.

$$\begin{aligned}
&\left|\leftarrow \int_{t}^{t+T} L\, d\tau \rightarrow\right| \\
J &= XS_f X^T + \int_{t}^{t+T} URU^T d\tau \\
U &= \left[ u_x(t,\tau) \quad u_\gamma(t,\tau) \quad u_z(t,\tau) \quad u_{Xzmp}(t,\tau) \quad u_{Yzmp}(t,\tau) \right] \\
X &= [\, x_f - x(t_f) \quad y_f - y(t_f) \quad z_f - z(t_f) \\
&\quad\; \dot{x}_f - \dot{x}(t_f) \quad \dot{y}_f - \dot{y}(t_f) \quad \dot{z}_f - \dot{z}(t_f) \quad ]
\end{aligned} \tag{21}$$

Also in this case, similar to the two-dimensional plane, the scope of the invention claims all evaluation functions J if they include $u^2_{xzmp}$ + $u^2_{yzmp}$ in an "L" portion of the equation J.

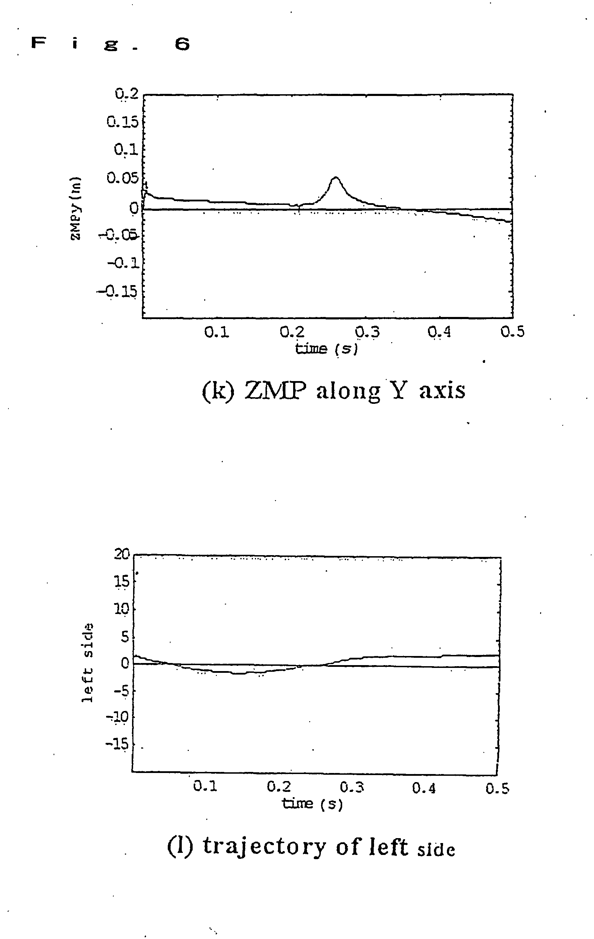

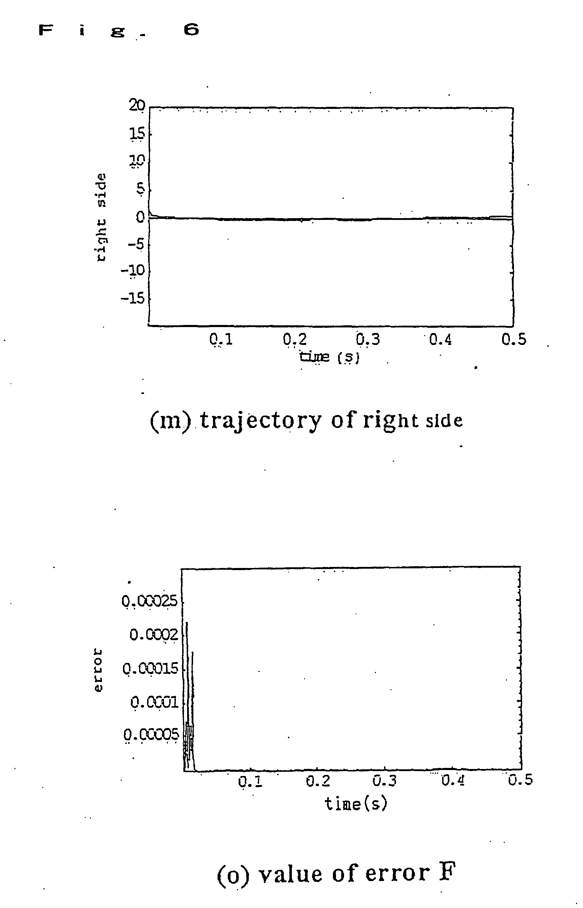

With the above-described formulation, simulation calculations were performed, the results being shown in Figs. 5(a) to 6(o). The initial values were (-0.125,-0.125, 0.800, 0.500, 0.500, 0.0000) and the target values were (0.125, 0.125, 0.800, 0.500, 0.500, 0.000). R and Sf were set as R = (1.0, 1.0, 1.0, 1.0, 1.0) and Sf = (100.0, 600.0, 3400.0, 0.1, 2.0, 0.1). Figs. 6(j) and 6(k) show a change in a ZMP input of each axis. It can be seen from Figs. 6(j) and 6(k) that ZMP is ± 0.1 m or smaller along the x-axis and + 0.05 m or smaller along the y-axis. In this range, the appropriate sole of a robot foot can be designed. Figs. 6(1) and 6(m) correspond to the left and right side values of the equation constraint condition of the equation (20).

Two methods of embodying the invention can be realized. The first method utilizes both RHC and nonlinear control. A robot main body is generally a nonlinear mechanical link system. In application to a real robot, it can be considered to utilize both a method of generating ZMP in real time as described earlier and a conventional nonlinear control. That is; the target trajectories of a robot are generated in real time by the above-described method and control of each articulation of the robot is performed by nonlinear control based upon present control theories. It is necessary for a conventional leg-type robot to prepare beforehand each target trajectory through off-line calculations, and therefore it is impossible for the robot to walk passing an obstacle by. In this respect, the embodiment method is effective.

A current ZMP value of a real robot can be measured with a force sensor or the like. The control system is configured so that an actual ZMP follows a new target value using a $u_{zmp}$ value sequentially obtained through RHC. The control system is also configured so that the center of gravity of the actual robot follows new target acceleration values using acceleration inputs $u_X$ and $u_Z$. In this manner, the embodiment method is advantageous in that the method can be applied to a two-, four-leg-type robot or other leg-type robots because modeling is realized by using the center of gravity of the entire robot.

The second method is a method of performing all processing by RHC. For the formulation of RHC, the state equation is not represented by a center of gravity of one mass point of the entire robot, but the nonlinear state equation is set up by taking into consideration the nonlinearity of each articulation of the robot. This method can check the nonlinearity through strict modeling. However, if the number of legs is changed or the structure of the robot is altered, modeling is required to be done over again from the beginning.

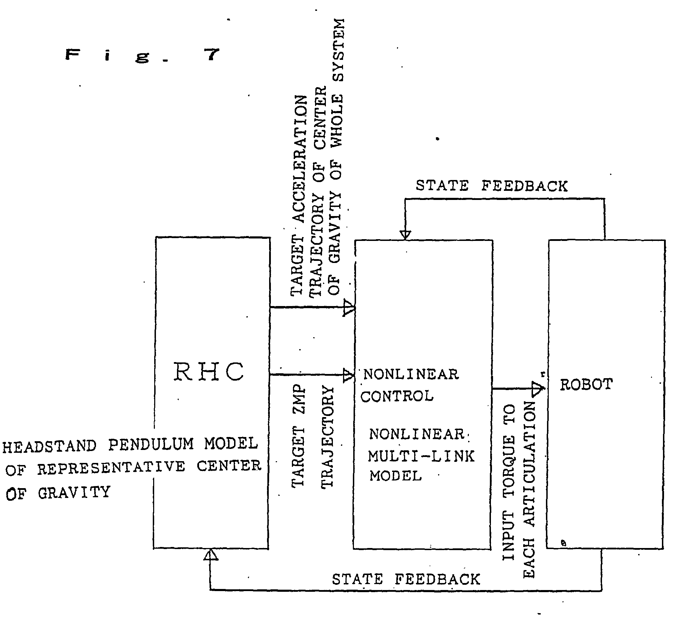

After a width and walking speed of each leg is determined, the nonlinear force caused by moving forward a free leg or the like is controlled by a nonlinear control unit shown in Fig. 7.

In designing a robot, calculation results obtained by changing each parameter in accordance with the first invention are collected in advance, so that the motion range in the sole area of each target ZMP trajectory can be grasped for a preset robot motion. It is therefore possible to properly set the sole area of a robot.

For a four-leg type robot, each pair of two legs can be treated alternately as a support leg and a free leg. A plane constituted by front portions of the two legs can have a wider area than that of a two-leg type robot.

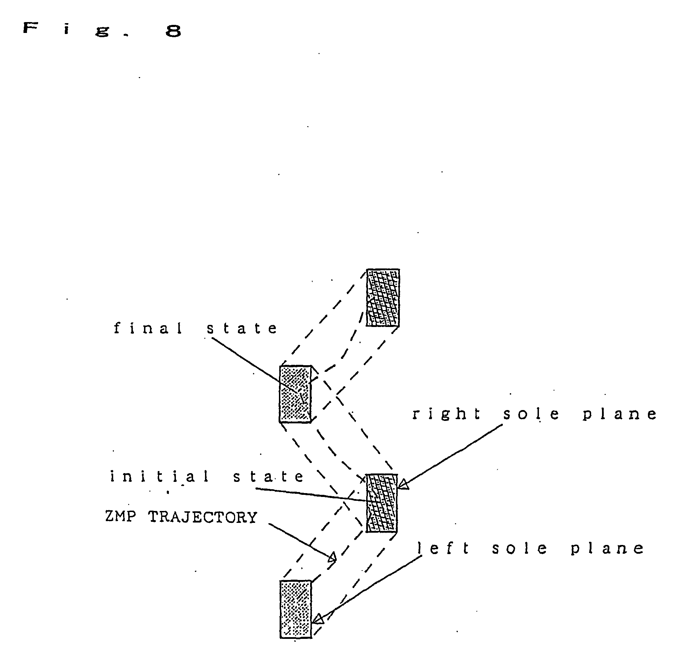

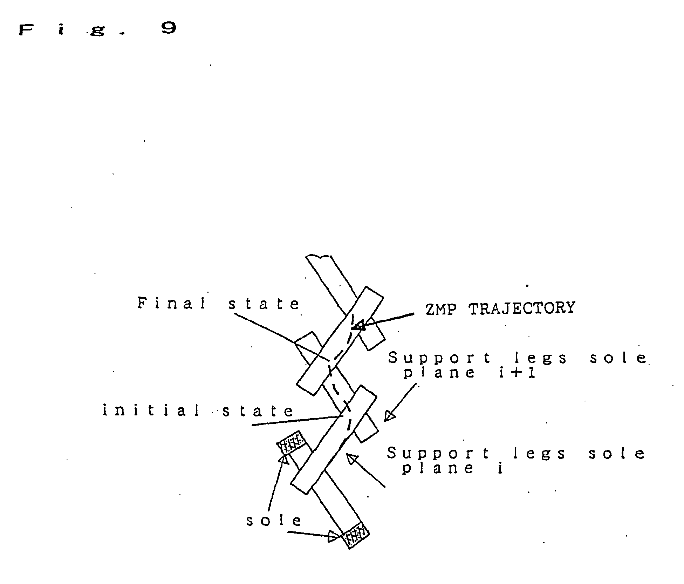

For example, If a four-leg type robot trots, it is necessary that each pair of diagonal legs repeats alternately a support leg period and a free leg period. In such as case, as shown in Fig. 9, the final state point is set to a point where a line starting from the initial state point and traversing the plane reaches. the plane of the next support leg pair. ZMP.can therefore move near along the line. If the plane area is set so that ZMP is inside of the plane area, then a stable waking pattern can be realized.

EFFECT OF THE INVENTION

According to the real time optimum control method of a leg-type robot of this invention, it is possible to provide ZMP control of the leg-type robot which control utilizes RHC control (Receding Horizon Control) capable of real-time optimization calculation.

As a result, target trajectories of a robot can be generated in real time and it is not necessary to prepare target trajectories in advance through off-line calculations as in a conventional example. It is therefore possible to allow a leg-type robot to walk by taking proper steps to meet the situation, such as y passing by an obstacle.

BRIEF DESCRIPTION OF THE DRAWINGS

[Fig. 1] An explanatory diagram of ZMP of a leg-type robot.
[Fig. 2] A diagram showing a sagittal plane and a frontal plane of a leg-type robot.
[Fig. 3] A diagram illustrating a dynamic balance in a three-dimensional space.
[Fig. 4] A diagram showing examples of numerical calculations.
[Fig. 5] A diagram partially showing simulation results of formulation in a three-dimensional space.
[Fig. 6] A diagram partially showing the remaining simulation results of formulation in the three-dimensional space shown in Fig. 5.
[Fig. 7] A control block diagram.
[Fig. 8] An explanatory diagram showing a walking state of a two-leg type robot.
[Fig. 9] An explanatory diagram showing a walking state of a four-leg type robot.

[DESCRIPTION OF REFERENCE NUMERALS]

ZMP zero moment point

**Claims**

1. A real time optimum control method for a leg-type robot wherein optimum target ZMP trajectories are obtained in real time by solving an optimum solution of an equation:

$$u_{zmp}(u_z\text{-}g)=x(u_z\text{-}g)\text{-}zu_x \qquad (16)$$

by using $x_{zmp}$ as a new input $u_{zmp}$ where ZMP of the leg-type robot satisfies an equation constraint condition of an equation:

$$x_{zmp}(u_z\text{-}g)=x(u_z\text{-}g)\text{-}zu_x \qquad (15)$$

2. A real time optimum control method for a leg-type robot according to claim 1, wherein a target trajectory of the center of gravity of the entire robot and optimum target trajectories are generated and each articulation of the robot is controlled through nonlinear control.

3. A real time optimum control method for a leg-type robot according to claim 1, wherein calculation results obtained by changing each parameter are collected in advance, so that the motion range in the sole area of each target ZMP trajectory can be grasped.for.a preset robot motion and the sole area of the robot can be properly set.

F i g . 1

Fig. 2

Forward

Sagittal Plane

Frontal Plane

F i g . 3

F i g . 4

(a) trajectory of x

(b) position trajectory of z

# F i g . 4

(c)trajectory of $\dot{x}$

(d) trajectory of $\dot{z}$

F i g . 4

(e) trajectory of input x

(f) trajectory of input z

F i g . 4

(g) trajectory of ZMP

(h) value of error F

F i g . 4

(i) trajectory of left side

(j) trajectory of right side

F i g . 5

(a) trajectory of X

(b) trajectory of Y

F i g . 5

(c) trajectory of Z

(d) trajectory of $\dot{X}$

F i g . 5

(e)trajectory of Ẏ

(f) trajectory of Ż

Ｆ　ｉ　ｇ　．　5

(g) input along X axis

(h) input along Y axis

F i g . 6

(i)input along Z axis

(j) ZMP along X axis

**F i g . 6**

(k) ZMP along Y axis

(l) trajectory of left side

F i g . 6

(m) trajectory of right side

(o) value of error F

Fig. 7

HEADSTAND PENDULUM MODEL
OF REPRESENTATIVE CENTER
OF GRAVITY

RHC

TARGET ACCELERATION
TRAJECTORY OF CENTER
OF GRAVITY OF WHOLE SYSTEM

TARGET ZMP
TRAJECTORY

STATE FEEDBACK

NONLINEAR
CONTROL

NONLINEAR
MULTI-LINK
MODEL

INPUT TORQUE TO
EACH ARTICULATION

ROBOT

STATE FEEDBACK

Fig. 8

final state

right sole plane

initial state

ZMP TRAJECTORY

left sole plane

F i g. 9

Final state

ZMP TRAJECTORY

Support legs sole
plane i+1

initial state

Support legs sole
plane i

sole

# INTERNATIONAL SEARCH REPORT

| International application No. |
| --- |
| PCT/JP01/02775 |

**A. CLASSIFICATION OF SUBJECT MATTER**
Int.Cl⁷ B25J 5/00

According to International Patent Classification (IPC) or to both national classification and IPC

**B. FIELDS SEARCHED**

Minimum documentation searched (classification system followed by classification symbols)
Int.Cl⁷ B25J 5/00

Documentation searched other than minimum documentation to the extent that such documents are included in the fields searched
Jitsuyo Shinan Koho          1920-1998     Toroku Jitsuyo Shinan Koho  1994-2000
Kokai Jitsuyo Shinan Koho   1971-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 6-170758, A (Honda Motor Co., Ltd.), 21 June, 1994 (21.06.94), Full text   (Family: none) | 1-3 |
| A | EP, 965416, A1 (Honda Motor Co., Ltd.), 22 December, 1999 (22.12.99), Full text & JP, 10-230485, A  & WO, 98/026905, A1 | 1-3 |

☐ Further documents are listed in the continuation of Box C.     ☐ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 June, 2001 (26.06.01) | 10 July, 2001 (10.07.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)